(19)

Europäisches Patentamt

European Patent Office

Office européen des brevets

(11) **EP 4 597 962 A1**

(12) **EUROPEAN PATENT APPLICATION**
published in accordance with Art. 153(4) EPC

(43) Date of publication:
06.08.2025  Bulletin 2025/32

(51) International Patent Classification (IPC):
*H04L 27/26* (2006.01)

(21) Application number: 23917297.6

(22) Date of filing: 19.12.2023

(52) Cooperative Patent Classification (CPC):
H04L 27/26

(86) International application number:
PCT/CN2023/139913

(87) International publication number:
WO 2024/152830 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 17.01.2023  CN 202310118867

(71) Applicant: ZTE Corporation
Shenzhen, Guangdong  518057 (CN)

(72) Inventors:
• HUA, Jian
 Shenzhen, Guangdong 518057 (CN)
• XIN, Yu
 Shenzhen, Guangdong 518057 (CN)
• BAO, Tong
 Shenzhen, Guangdong 518057 (CN)

(74) Representative: Chimini, Francesco et al
Jacobacci & Partners S.p.A.
Piazza della Vittoria 11
25122 Brescia (IT)

(54) **DATA TRANSMISSION METHOD, DATA PROCESSING METHOD, COMMUNICATION DEVICE, MEDIUM AND PRODUCT**

(57)     Embodiments of the present invention provide a data transmission method, a data processing method, a communication device, a medium, and a product. The data transmission method includes: dividing data to be transmitted into N groups, to obtain N groups of first data sequences, wherein N is an integer greater than or equal to 2; respectively performing M-times oversampling on each group of first data sequences, to obtain N groups of second data sequences, wherein M is an integer greater than or equal to 3; respectively performing inverse fast Fourier transform on the N groups of second data sequences, to obtain third data sequences; respectively performing phase compensation processing on the third data sequences, to obtain fourth data sequences; and performing inverse fast Fourier transform on the fourth data sequences, to obtain a group of data sequences, and transmitting the group of data sequences on a time-frequency resource.

Fig. 4

**Description**

**Cross-Reference to Related Application**

This invention is based on Chinese patent invention CN 202310118867.6 filed on January 17, 2023, and claims the priority to the invention, which is incorporated in its entirety herein by reference.

**Technical Field**

Embodiments of the present invention relate to the technical field of communications, and in particular, to a data transmission method, a data processing method, a communication device, a medium, and a product.

**Background**

An orthogonal frequency division multiplexing (OFDM) technology is widely used in wireless communications. In an OFDM system, due to the impact of a multipath effect, symbols may collide when they reach a receiving side through multipath transmission, causing delay expansion of pulse signals and generating inter symbol interference (ISI). Therefore, cyclic prefix-orthogonal frequency division multiplexing (CP-OFMD) technology is used to solve the problem of multipath delay. However, a CP-OFDM system easily causes inter subband interference due to great spectrum leakage.

In the related technology, the problem of inter band interference is improved by inserting a guard interval in a frequency domain, but the above technology reduces the utilization rate of spectrum resources. How to improve the utilization rate of spectrum resources and reduce waste of spectrum resources is an urgent problem that needs to be discussed and solved.

**Summary**

The embodiments of the present invention provide a data transmission method, a data processing method, a communication device, a medium, and a product, and aim to reduce waste of spectrum resources.

In a first aspect, an embodiment of the present invention provides a data transmission method. The method includes: dividing data to be transmitted into N groups, to obtain N groups of first data sequences, wherein N is an integer greater than or equal to 2; respectively performing M-times oversampling on each group of first data sequences, to obtain N groups of second data sequences, wherein M is an integer greater than or equal to 3; respectively performing inverse fast Fourier transform on the N groups of second data sequences, to obtain third data sequences; respectively performing phase compensation processing on the third data sequences, to obtain fourth data sequences; and performing inverse fast Fourier transform on the fourth data sequences, to obtain a group of data sequences, and transmitting the group of data sequences on a time-frequency resource.

In a second aspect, an embodiment of the present invention provides a data processing method. The method includes: dividing data to be transmitted into N groups, to obtain N groups of first data sequences, wherein N is an integer greater than or equal to 2; adding first zero data at the beginning of each group of first data sequences, and adding second zero data at the end of each group of first data sequences, to obtain N groups of second data sequences; respectively performing inverse fast Fourier transform on the N groups of second data sequences, to obtain third data sequences; respectively performing phase compensation processing on the third data sequences, to obtain fourth data sequences; and performing inverse fast Fourier transform on the fourth data sequences, to obtain a group of data sequences.

In a third aspect, an embodiment of the present invention provides a communication device, including: a memory, a processor, and a computer program stored on the memory and runnable on the processor, wherein the processor performs the computer program to implement the data transmission method as described in the first aspect, or the data processing method as described in the second aspect.

In a fourth aspect, an embodiment of the present invention provides a computer-readable storage medium, the computer-readable storage medium includes a computer-executable instruction stored, wherein the computer-executable instruction is used for performing the data transmission method as described in the first aspect, or the data processing method as described in the second aspect.

In a fifth aspect, an embodiment of the present invention provides a computer program product, including a computer program or a computer instruction, wherein the computer program or the computer instruction is stored in a computer-readable storage medium; a processor of a computer device reads the computer program or the computer instruction from the computer-readable storage medium, and the processor performs the computer program or the computer instruction, to cause the computer device to perform the data transmission method as described in the first aspect, or the data processing method as described in the second aspect.

**Brief Description of the Drawings**

Fig. 1 is a schematic diagram of a communication system according to an embodiment of the present invention;

Fig. 2 is a flowchart of a data transmission method according to an embodiment of the present invention;

Fig. 3 is a flowchart of a data processing method according to an embodiment of the present invention;

Fig. 4 is a schematic diagram of a data transmission process of performing frequency domain 3-times oversampling according to an example of the present invention;

Fig. 5 is a schematic diagram of a data transmission process of performing frequency domain 4-times oversampling according to an example of the present invention;

Fig. 6 is a schematic diagram of a data transmission process together with other groups of data according to an example of the present invention;

Fig. 7 is a schematic diagram of a data transmission process of other filled data according to an example of the present invention;

Fig. 8 is a schematic diagram of a data transmission process of constellation point modulated data according to an example of the present invention;

Fig. 9 is a schematic diagram of a data transmission process of two inverse fast Fourier transforms according to an example of the present invention; and

Fig. 10 is a schematic structural diagram of a communication device according to an embodiment of the present invention.

**Detailed Description of the Embodiments**

In order to make the objectives, technical solutions, and advantages of the present invention clearer, the following is a further detailed explanation of the present invention in conjunction with the accompanying drawings and embodiments. It should be understood that the specific embodiments described here are only intended to explain the present invention and are not intended to limit the present invention.

It should be noted that division of functional modules has been shown in a schematic diagram of an apparatus, and a logical order is shown in the flowchart. In some cases, the steps shown or described can be executed in an order different from the module division in the apparatus or the order in the flowchart. The terms "first", "second", etc. in the specification, claims, and the above accompanying drawings are defined to distinguish similar objects, and do not have to be used to describe a specific order or sequence.

In the description of the embodiments of the present invention, unless otherwise explicitly limited, terms such as arrangement, mounting, and connection should be broadly understood. Those skilled in the art can properly determine the specific meanings of the above terms in the embodiments of the present invention based on specific content of technical solutions.

In the embodiments of the present invention, terms such as "further", "exemplarily", or "optionally" are used to indicate examples, illustrations, or explanations, and should not be interpreted as being more preferred or advantageous than other embodiments or design solutions. The use of terms such as "further", "exemplarily", or "optionally" is intended to present relevant concepts in a specific way.

The technical solutions of the embodiments of the present invention can be applied to various communication systems, such as a wideband code division multiple access (WCDMA) mobile communication system, an evolved universal terrestrial radio access network (E UTRAN) system, a next generation radio access network (NG RAN) system, a long term evolution (LTE) system, a worldwide interoperability for microwave access (WiMAX) communication system, a 5th generation (5G) system such as a new radio access technology (NR), and a future communication system such as a 6G system.

The technical solutions of the embodiments of the present invention can be applied to various communication technologies, such as microwave communication, optical wave communication, and millimeter wave communication.

Specific technologies and specific device forms used in the embodiments of the present invention are not limited.

In the related technology, long term evolution (LTE) is a fourth generation (4G) wireless cellular communication technology. The LTE uses an orthogonal frequency division multiplexing (OFDM) technology, and time-frequency resources composed of subcarriers and OFDM symbols form wireless physical time-frequency resources of the LTE system. At present, the OFDM technology is widely used in wireless communication. Since a cyclic prefix (CP) is used, the CP-OFDM system can well solve the problem of multipath delay, and divide a frequency selective channel into a set of parallel flat channels, which simplifies a channel estimation method and achieves high channel estimation accuracy. However, due to its great spectrum leakage, the CP-OFDM system is sensitive to a frequency offset and a time offset between adjacent subbands, which can easily lead to inter subband interference. In the related technology, the LTE system uses a guard interval in a frequency domain to reduce or eliminate the interference. In order to ensure a protection effect, the guard interval needs to occupy more resources, resulting in a decrease in the utilization rate of spectrum resources.

A fifth generation new radio (5G NR) communication technology still uses CP-OFDM as a basic waveform, and different numerologies can be used between two adjacent sub bands. The numerologies include a subcarrier spacing, a symbol length, a CP length, and the like. Since two transmission bands have different numerologies, any out-of-band leakage can disrupt the orthogonality between subcarriers and cause a new interference problem. A direct method in the related technology to solve the interference problem is to insert a protection bandwidth between two transmission bands with different numerologies, but this method can lead to waste of frequency resources.

In the OFDM technology, during performing inverse fast Fourier transform (IFFT) is performed, an entire bandwidth is usually subjected to IFFT once, which involves a large number of points, high computation complexity, and long processing time. In a scenario with a high delay requirement or a large number of IFFT points, performing IFFT processing once in the related technology cannot meet the delay requirement.

In order to solve the above problems, the embodiments of the present invention provide a data transmission method, a data processing method, a communication device, a medium, and a product. By grouping transmitted data to obtain N groups of first data sequences, inverse fast Fourier transform of multi-times oversampling is performed on each group of first data sequences, which reduces out-of-band leakage of a channel or a subband, avoids interference between adjacent frequency domain resource blocks, reduces guard intervals, and improves spectrum efficiency. Further, in the present invention, one inverse fast Fourier transform is further performed on the groups of the data to be transmitted; phase compensation is performed on each group of data after the first inverse fast Fourier transform; and second inverse fast Fourier transform is then performed, so that a result can be the same as a result obtained by one IFFT. Thus, the processing complexity is reduced, and the processing efficiency is improved.

The embodiments of the present invention will be further elaborated below in conjunction with the accompanying drawings.

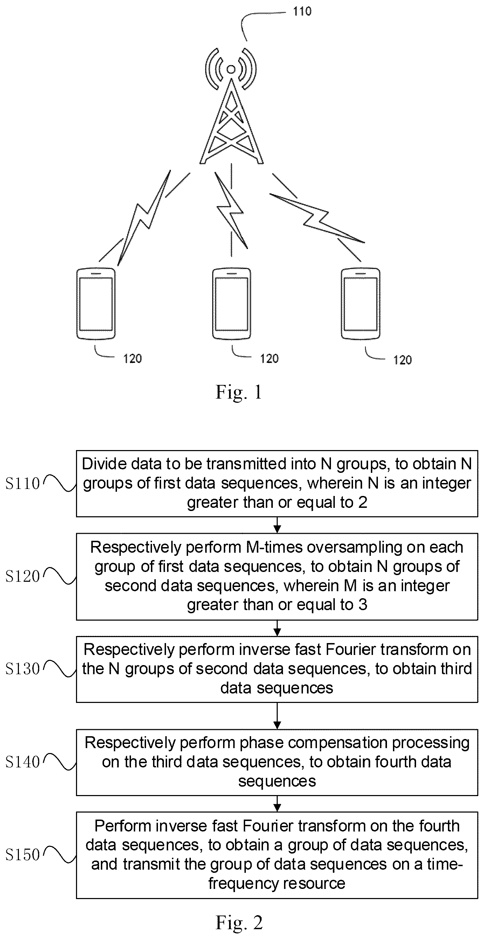

Fig. 1 is a schematic diagram of a communication system according to an embodiment of the present invention. As shown in Fig. 1, in this embodiment, exemplarily, the communication system includes a base station 110 and a plurality of terminals 120. The base station 110 communicates with each terminal 120.

It can be understood that a quantity of devices in the communication system of this embodiment and communication relationships between the devices can be expanded and changed according to an actual need, which will not be specifically limited here.

The base station 110 of this embodiment of the present invention can be an evolved NodeB (eNB), a transmission reception point (TRP), a next generation NodeB (gNB) in an NR system, a base station in other future mobile communication systems, an access node in a wireless fidelity (WiFi) system, or the like. This embodiment of the present invention imposes no limitation on a specific technology and a specific device form used by a network device.

Each terminal 120 of this embodiment of the present invention is an entity on a user side, such as a mobile phone, for receiving or transmitting signals. The terminal can also be referred to as a terminal, a user equipment (UE), a mobile station (MS), a mobile terminal (MT), and the like. The terminal may be an automobile with a communication function, a smart car, a mobile phone, a wearable device, a pad, a computer with a wireless transmission and reception capability, a virtual reality (VR) device, an augmented reality (AR) device, a communication device in industrial control, a communication device in self driving, a communication devices in remote medical surgery, a communication devices in a smart grid, a communication device in transportation safety, a communication device in a smart city, a communication device in a smart home, and the like. This embodiment of the present invention imposes no limitation on a specific technology and a specific device form used by a device.

Fig. 2 is a flowchart of a data transmission method according to an embodiment of the present invention. As shown in Fig. 2, the data transmission method can be applied to, but is not limited to, a base station, a terminal, or the communication system shown in Fig. 1. In this embodiment of Fig. 2, the data transmission method may include, but is not limited to, S110, S120, S130, S140, and S150.

At S110: Data to be transmitted is divided into N groups, to obtain N groups of first data sequences, wherein N is an integer greater than or equal to 2.

The data to be transmitted is divided into a plurality of groups for processing, so that long data can be divided into a plurality of pieces of short data for processing, thereby reducing a data processing complexity, reducing a processing delay, and increasing data processing flexibility.

In an embodiment, a quantity of data in each group of first data sequences satisfies 2 to the power of i, where i is an integer.

Exemplarily, the data to be transmitted contains 48 pieces of data. The data to be transmitted is divided into two groups, so that two groups of first data sequences are obtained. A first group of first data sequences contains 32 pieces of data, and a second group of first data sequences contains 16 pieces of data. The quantity of the data of the first group of first data sequences satisfies 2 to the power of 5, and the quantity of the data of the second group of first data sequences satisfies 2 to the power of 4.

In an embodiment, in the N groups of first data sequences, quantities of data of at least some groups of first data sequences are the same.

Exemplarily, the data to be transmitted contains 96 pieces of data. The data to be transmitted is divided into four groups, so that four groups of first data sequences are obtained. Each of a first group of first data sequences and a second group of first data sequences contains 32 pieces of data, and each of a third group of first data sequences and a fourth group of first data sequences contains 16 pieces of data. The quantity of the data of the first group of first data sequences and the quantity of the data of the second group of first data sequences are the same, and the quantity of the data of the third group of first data sequences and the quantity of the data of the fourth group of first data sequences are the same.

In an embodiment, a quantity of data in each group of first data sequences is the same.

Exemplarily, the data to be transmitted contains 128 pieces of data. The data to be transmitted is divided into four groups, so that four groups of first data sequences are obtained. Each group of first data sequences contains 32 pieces of data. The quantity of the data of each group of first data sequences satisfies 2 to the power of i, i=5. The quantity of the data of each group of first data sequences is the same.

In an embodiment, in the N groups of first data sequences, a ratio of quantities of data of at least some groups of first data sequences satisfies 2 to the power of i, wherein i is an integer.

Exemplarily, the data to be transmitted is divided into four groups. Each of a first group of first data sequences and a second group of first data sequences contains 16 pieces of data, and each of a third group of first data sequences and a fourth group of first data sequences contains 32 pieces of data. The quantity of the data in each group of first data sequence satisfies 2 to the power of i, wherein for the first group and the second group, the quantity is 2 to the power of 4, and for the third group and the fourth group, the quantity is 2 to the power of 5. The ratio of the quantities of the data of each group of first data sequences satisfies 2 to be power of i, wherein the ratio of the quantity of the data of the first group of first data sequences to the quantity of the data of the second group of first data sequences is 2 to be power of 0; the ratio of the quantity of the data of the third group of first data sequences to the quantity of the data of the fourth group of first data sequences is 2 to be power of 0; the ratio of the quantity of the data of the first group of first data sequences to the quantity of the data of the third/fourth group of first data sequences is 2 to the power of 1; and the ratio of the quantity of the data of the second group of first data sequences to the quantity of the data of the third/fourth group of first data sequences is 2 to the power of 1. Since the quantity of the data in each group of first data sequences satisfies 2 to the power of i, and the quantity of the data of each group of first data sequences is the same or the ratio of the quantities of the data satisfies 2 to the power of i, the data processing efficiency is improved during subsequent inverse fast Fourier transform, and inverse fast Fourier transform and filter processing can be simultaneously performed on data with different subcarrier spacings.

In an embodiment, the N groups of first data sequences are respectively transmitted in N frequency domain resource blocks. Each resource block includes sub-carriers. A quantity of the sub-carriers is equal to the quantity of the data contained in each group of first data sequence.

In an embodiment, during the inverse fast Fourier transform respectively performed on the N groups of first data sequences, zero-frequency positions of each group of inverse fast Fourier transform data are in the corresponding frequency domain resource blocks, and the zero-frequency positions of each group of inverse fast Fourier transform data during the inverse fast Fourier transform are different; and each zero-frequency position is in one of the sub-carriers of the frequency domain resource blocks corresponding to each group of inverse fast Fourier transform data.

Since each zero-frequency position in an operation on each group of inverse fast Fourier transform data is in one of the sub-carriers of each resource block, the orthogonality of each group of data in the frequency domain is ensured.

In an embodiment, the frequency domain resource blocks corresponding to each group of inverse fast Fourier transform data are all or part of frequency domain resource blocks in a channel bandwidth, and the data to be transmitted is all or part of data to be transmitted in the channel bandwidth.

In an embodiment, the data to be transmitted includes constellation point modulated data. A constellation point is also known as a constellation graph. In a digital modulation process, different modulation methods have corresponding constellation graphs which can be used to more intuitively and effectively determine a bit error rate. A main function of the constellation graph is for mapping during modulation and to determine a transmission point during reception, so as to correctly demodulate data. After the constellation point modulated data is grouped, zero data is added at the beginning and end of each group of data. Original reference signal data of the constellation point modulated data is also divided into different data groups and does not conflict with the added zero data.

In an embodiment, the data to be transmitted includes reference signal data.

In an embodiment, the data to be transmitted includes constellation point modulated data and reference signal data.

Exemplarily, the data to be transmitted includes reference signal data, and the reference signal data is respectively located at the beginning and end of the data to be transmitted. The data to be transmitted is divided into four groups, so that four groups of first data sequences are obtained. A first group of first data sequences includes the reference signal data at the beginning, and a fourth group of first data sequences includes the reference signal data at the end. In the present invention, after data containing reference signals and the reference signals are grouped, the zero data is added to the beginning and end of each group, and subsequent operations are performed. The reference signal data in the data to be transmitted cannot affect the added zero data, and the data can be fully restored at a receiving end.

At S120: M-times oversampling is respectively performed on each group of first data sequences, to obtain N groups of second data sequences, wherein M is an integer greater than or equal to 3. By performing the M-times oversampling on each group of first data sequences and then performing the inverse fast Fourier transform, out-of-band leakage can be reduced; interference between different groups of data in the frequency domain can be reduced; and the spectrum efficiency can be improved.

In an embodiment, M-times oversampling is respectively performed on each group of first data sequences, to obtain N groups of second data sequences, which includes: First zero data is added at the beginning of each group of first data sequences, and second zero data is added at the end of each group of first data sequences, to obtain the N groups of second data sequences, wherein a sum of a quantity of the first zero data and a quantity of the second zero data is R times of a quantity of data of each corresponding group; and R is a positive integer and is a difference between M and 1.

Exemplarily, the data to be transmitted is divided into two groups, so that two groups of first data sequences are obtained. A first group of first data sequences contains 32 pieces of data, and a second group of first data sequences contains 16 pieces of data. 4-times oversampling is performed on each group of first data sequences. First zero data is added at the beginning of each group of first data sequences, and second zero data is added at the end of each group of first data sequences, to obtain two groups of second data sequences. A sum of a quantity of the first zero data added to the first group of first data sequences and a quantity of the second zero data added to the first group of first data sequences is 96, and the sum of the quantity of the first zero data added to the first group of first data sequences and the quantity of the second zero data added to the first group of first data sequences is three times the quantity of the data of the first group of first data sequences, wherein M=4, and R=M-1. A sum of a quantity of the first zero data added to the second group of first data sequences and a quantity of the second zero data added to the second group of first data sequences is 48, and the sum of the quantity of the first zero data added to the second group of first data sequences and the quantity of the second zero data added to the second group of first data sequences is three times the quantity of the data of the second group of first data sequences, wherein M=4, and R=M-1.

By adding the zero data at the two ends of each group of first data sequences, out-of-band leakage of different groups of data after a filter is added can be reduced.

In an embodiment, the quantity of the first zero data is equal to the quantity of the second zero data.

For example, the data to be transmitted is divided into two groups, so that two groups of first data sequences are obtained. A first group of first data sequences contains 32 pieces of data, and a second group of first data sequences contains 16 pieces of data. 4-times oversampling is performed on each group of first data sequences. First zero data is added at the beginning of each group of first data sequences, and second zero data is added at the end of each group of first data sequences, to obtain two groups of second data sequences. A quantity of the first zero data added to the first group of first data sequences and a quantity of the second zero data added to the first group of first data sequences are both 48, and a quantity of the first zero data added to the second group of first data sequences and a quantity of the second zero data added to the second group of first data sequences are both 24. For each group of first data sequences, the quantity of the first zero data added is equal to the quantity of the second zero data added.

In an embodiment, a quantity of data in each group of second data sequences satisfies 2 to the power of i, where i is an integer. Since the quantity of the data in each group of second data sequences satisfies 2 to the power of i, inverse fast Fourier transform can be respectively performed on each group of second data sequences, to improve the computation efficiency.

In an embodiment, in the N groups of second data sequences, a ratio of quantities of data of at least some groups of second data sequences satisfies 2 to the power of i, wherein i is an integer.

In an embodiment, in the N groups of first data sequences, quantities of data of at least some groups of second data sequences are the same.

In an embodiment, a quantity of data in each group of second data sequences is the same.

At S130: Inverse fast Fourier transform is respectively performed on the N groups of second data sequences, to obtain third data sequences.

By adding the zero data to the beginning and end of each group of first data sequences and performing inverse fast Fourier transform of M-times oversampling, due to the oversampling method, the sampling frequency is increased; out-of-band leakage of a channel or a subband is greatly reduced; interference between different groups of data in the frequency domain is reduced; guard intervals are reduced; and the spectrum efficiency is improved.

In an embodiment, a quantity of data of each group of second data sequences is the same as a quantity of data of each corresponding group of third data sequences obtained after inverse fast Fourier transform is performed.

In an embodiment, quantities of data contained in the N groups of third data sequences are the same.

In an embodiment, a quantity of data of at least one group of third data sequences is different from a quantity of data of another group of third data sequences; and a ratio of quantities of data of the groups of third data sequences is 2 to the power of i, wherein i is a natural number.

In an embodiment, inverse fast Fourier transform is respectively performed on the N groups of second data sequences; and time domain data is added into at least one of the N groups of second data sequences subjected to the inverse fast Fourier transform, to obtain the third group data sequences, wherein the time domain data is time domain data generated by inverse fast Fourier transform, and a quantity of data in each group of third data sequences is the same.

When the quantity of the data of at least one group of third data sequences is different from the quantity of the data of the another group of third data sequences, other data is connected in series to the at least one group of third data sequences, so that the quantities of the data contained in the N groups of third data sequences are the same. Other data filled may be data that is from other groups and has been subjected to one inverse fast Fourier transform of M-times oversampling, or may be empty data.

Exemplarily, the data to be transmitted is divided into four groups, so that four groups of first data sequences are obtained. Each of a first group of first data sequences and a second group of first data sequences contains 16 pieces of data, and each of a third group of first data sequences and a fourth group of first data sequences contains 32 pieces of data. 3-times oversampling is performed on each group of first data sequence data. 16 pieces of zero data are added to the beginning and end of each of the first group of first data sequences and the second group of first data sequences, and 32 pieces of zero data are added to the beginning and end of each of the third group of first data sequences and the fourth group of first data sequences, so that four groups of second data sequences are obtained. A quantity of data of each of a first group of second data sequences and a second group of second data sequences is 48, which is three times the quantity of the data of each of the first group of first data sequences and the second group of first data sequences. A quantity of data of each of a third group of second data sequences and a fourth group of second data sequences is 96, which is three times the quantity of the data of each of the third group of first data sequences and the fourth group of first data sequences. In this case, the quantity of the data of each of the first group of second data sequences and the second group of second data sequences is different from the quantity of the data of each of the third group of second data sequences and the fourth group of second data sequences. Inverse fast Fourier transform is performed on the four groups of second data sequences, to obtain four groups of time domain data sequences. A quantity of data of each of a first group of time domain data sequences and a second group of time domain data sequences is equal to 48. The first group of time domain data sequences is regarded as symbol 1, and another group of time domain data sequences subjected to one inverse fast Fourier transform of M-times oversampling and containing 48 pieces of data is regarded as symbol 2. Symbol 1 and symbol 2 are connected in series, to obtain a first group of third data sequences. A quantity of data of the first group of third data sequences is the same as the quantity of the data of each of the third group of second data sequences and the fourth group of second data sequences, and is equal to 96. The second group of time domain data sequences is regarded as symbol 3, and a time domain data sequence containing 48 pieces of zero data is regarded as symbol 4. Symbol 3 and symbol 4 are connected in series, to obtain a second group of third data sequences. A quantity of data of the second group of third data sequences is the same as the quantity of the data of each of the first group of third data sequences, the third group of second data sequences, and the fourth group of second data sequences, and is equal to 96. A quantity of data of each of a third group of time domain data sequences and a fourth group of time domain data sequences is equal to 96. The third group of time domain data sequences is used as a third group of third data sequences, and the fourth group of time domain data sequences is used as a fourth group of third data sequences. Namely, four groups of third data sequences are obtained. The quantities of the data of the four groups of third data sequences are the same, and are equal to 96.

By filling other data, the quantities of the data contained in the finally obtained N groups of third data sequences are the same, which facilitates subsequent second inverse fast Fourier transform on the groups of data and simplifies a computation process. By filling other groups of time domain data sequences subjected to one inverse fast Fourier transform of M-times oversampling, the third data sequences are obtained, so that the utilization rate of resources is improves.

At S140: Phase compensation processing is respectively performed on the third data sequences, to obtain fourth data sequences.

In an embodiment, phase compensation processing is performed on the third data sequences according to the M, the N, and a data position of the third data sequences, to obtain the fourth data sequences.

In an embodiment, each group of third data sequences is multiplied with a corresponding coefficient group for phase compensation processing.

In an embodiment, a corresponding coefficient group X(n) is:

$$X(n) = [exp(2\pi i/M \times (n-1) \times 0), exp(2\pi i/M \times (n-1) \times 1), ..., exp(2\pi i/M \times (n-1) \times (M \times k(n)-1))], n = 1,2....N.$$

In an embodiment, a corresponding coefficient group X(n) is:

$$X(n) = [exp(2\pi i/M \times (n-1) \times 0+\pi i) exp(2\pi i/M \times (n-1) \times 1+\pi i), ..., exp(2\pi i/M \times (n-1) \times (M \times k(n)-1)+\pi i)], n = 1,2....N.$$

Exemplarily, the data to be transmitted is divided into four groups, so that four groups of first data sequences are obtained. Each group of first data sequences contains 36 pieces of data. Frequency domain 4-times oversampling is respectively performed on each group of first data sequences. Namely, 48 pieces of zero data are added to each of the beginning and end of each group of first data sequences, to obtain four groups of second data sequences. Then, 128-point inverse fast Fourier transform is performed to obtain four groups of third data sequences. The four groups of third data sequences are multiplied by corresponding coefficient groups, wherein a first group of second data sequences is multiplied by a coefficient group X(1)=[1, 1, 1, ..., 1]; a second group of third data sequences is multiplied by a coefficient group X(2)= [1, exp($\pi$i/2), exp(2$\pi$i/2), ..., exp(127$\pi$i/2)]; a third group of third data sequences is multiplied by a coefficient group X(3)=[1, exp($\pi$i), exp(2$\pi$i), ..., exp(127$\pi$i)]; and a fourth group of third data sequences is multiplied by a coefficient group X(4)=[1, exp(3$\pi$i/2), exp(6$\pi$i/2), ..., exp(3*127$\pi$i/2)], to obtain four groups of fourth data sequences.

It can be understood that subsymbols are subsequently connected in series and superposed at an interval of 1/M of one subsymbol length, making two IFFTs equivalent to one IFFT. However, phase compensation needs to be performed at a transmitting end because of a change in a phase of original data. Since each group of second data sequences is multiplied by a coefficient group for phase compensation, a receiving end can restore original frequency domain data when receiving data sequences that are transmitted by the transmitting end and obtained after the subsymbols are connected in series and superposed at an interval of 1/M of one subsymol length.

In an embodiment, phase compensation processing is respectively performed on the third data sequences and a seventh data sequence, to obtain the fourth data sequences, wherein the data to be transmitted does not include the seventh data sequence.

In an embodiment, phase compensation processing is respectively performed on the N groups of third data sequences and P groups of seventh data sequences, to obtain N+P groups of fourth data sequences, wherein the data to be transmitted does not include the seventh data sequences, and P is a positive integer greater than or equal to 1. The phase compensation processing is respectively performed on the seventh data sequences according to M, N, P, and a data position of the seventh data sequences.

In an embodiment, the seventh data sequence is data that is generated by one inverse fast Fourier transform of M-times oversampling.

In an embodiment, the seventh data sequence is data generated by one inverse fast Fourier transform of M-times oversampling on other data to be transmitted. A quantity of data in the seventh data sequence is equal to a quantity of data of the third data sequences.

In an embodiment, the seventh data sequence is zero data. A quantity of data in the seventh data sequence is equal to a quantity of data of the third data sequences.

In an embodiment, a quantity of data of each group of seventh data sequences is the same as the quantity of data of each group of third data sequences.

Exemplarily, the data to be transmitted is divided into four groups, so that four groups of first data sequences are obtained. Each group of first data sequences contains 36 pieces of data. Frequency domain 4-times oversampling is respectively performed on each group of first data sequences. Namely, 48 pieces of zero data are added to each of two ends of each group of data, to obtain four groups of second data sequences. Then, 128-point inverse fast Fourier transform is performed to obtain four groups of third data sequences. The four groups of third data sequences are multiplied by corresponding coefficient groups for phase compensation processing, wherein a first group of second data sequences is multiplied by a coefficient X(1)=[1, 1, 1, ..., 1]; a second group of third data sequences is multiplied by a coefficient group X(2)=[1, exp($\pi$i/2), exp(2$\pi$i/2), ..., exp(127$\pi$i/2)]; a third group of third data sequences is multiplied by a coefficient group X(3)=[1, exp($\pi$i), exp(2$\pi$i), ..., exp(127$\pi$i)]; and a fourth group of third data sequences is multiplied by a coefficient group X(4)=[1, exp(3$\pi$i/2), exp(6$\pi$i/2), ..., exp(3*127$\pi$i/2)]. There are also two groups of seventh data sequences. The seventh data sequences are obtained by performing inverse fast Fourier transform of one 4-times oversampling on other data to be transmitted. Each group of seventh data sequences contains 128 pieces of data, and this quantity is the same as the quantity of the data of each group of third data sequences. The two groups of seventh data sequences are respectively multiplied by coefficient groups for phase compensation processing. A first group of seventh data sequences is multiplied by a coefficient group X(5)=[1, exp(4πi/2), exp(8πi/2), ..., exp(4*127πi/2)], and a second group of seventh data sequences is multiplied by a coefficient group X(6)=[1, exp(5πi/2), exp(10πi/2), ..., exp(6*127πi/2)]. The four groups of third data sequences multiplied by the coefficient groups and the two groups of seventh data sequences multiplied by the coefficient groups form six groups of fourth data sequences together.

By performing inverse fast Fourier transform on other data to be transmitted together, the data processing flexibility has been improved. The quantity of the data of each group of seventh data sequences is the same as the quantity of the data of each group of third data sequences, so that the seventh data sequences can be subjected to second inverse fast Fourier transform together with the third data sequences.

At S150: Inverse fast Fourier transform is performed on the fourth data sequences, to obtain a group of data sequences, and the group of data sequences is transmitted on a time-frequency resource.

In an embodiment, S150 at least includes but is not limited to the following steps:

X groups of fifth data sequences are obtained according to data in the same columns in the N groups of fourth data sequences, wherein X is a quantity of data of the fourth data sequences, namely, a quantity of groups of fifth data sequences is the same as the quantity of the data of the fourth data sequences;

inverse fast Fourier transform is respectively performed on the X groups of fifth data sequences, to obtain X subsymbols;

the X subsymbols are connected in series in a time domain, to obtain a group of sixth data sequences; and

the sixth data sequences are transmitted in the time domain.

Exemplarily, each of the third groups of third data sequences contains 128 pieces of data. Data in first columns in the first, second, third, and fourth groups of fourth data sequences are used to obtain a first group of fifth data sequences. Then, data in second columns of the first, second, third, and fourth groups of fourth data sequences are used to obtain a second group of fifth data sequences, and so on, thus obtaining 128 groups of fifth data sequences. Inverse fast Fourier transform of oversampling is performed on the 128 groups of fifth data sequences, to obtain 128 subsymbols. The 128 subsymbols are connected in series in a time domain, to obtain a group of sixth data sequences. The sixth data sequences are transmitted in the time domain.

In an embodiment, inverse fast Fourier transform of zero-fill oversampling is performed on the fourth data sequences, to obtain the group of data sequences.

Exemplarily, each of the four groups of fourth data sequences contains 128 pieces of data. Data in first columns in the first, second, third, and fourth groups of fourth data sequences are used, and six pieces of zero data is added to each of the beginning and end of a data group composed of the four pieces of data used, to obtain a first group of fifth data sequences. Then, data in second columns of the first, second, third, and fourth groups of fourth data sequences are used, and six pieces of zero data is added to each of the beginning and end of a data group composed of the four pieces of data used, to obtain a second group of fifth data sequences, and so on, thus obtaining 128 groups of fifth data sequences. A quantity of data of each group of fifth data sequences is 16. Inverse fast Fourier transform is performed on the 128 groups of fifth data sequences, to obtain 128 subsymbols. The 128 subsymbols are connected in series in a time domain, to obtain a group of sixth data sequences. The sixth data sequences are transmitted in the time domain.

In an embodiment, a serial connection interval between the X subsymbols is 1/M of one subsymbol length.

Exemplarily, each of the four groups of third data sequences contains 128 pieces of data. Data in first columns in the first, second, third, and fourth groups of fourth data sequences are used to obtain a first group of fifth data sequences. Then, data in second columns of the first, second, third, and fourth groups of fourth data sequences are used to obtain a second group of fifth data sequences, and so on, thus obtaining 128 groups of fifth data sequences. 16-point inverse fast Fourier transform of 4-times oversampling is performed on each group of fifth data sequences, to obtain 128 subsymbols. A length of each subsymbol is 16 points. The 128 subsymbols are connected in series in the time domain. The serial connection interval between subsymbol 1 and subsymbol 2 is 4 points, namely 1/M of one subsymbol length, M = 4. The serial connection interval between subsymbol 2 and subsymbol 3 is 4 points. In this way, a serial connection interval between every two subsymbols is 4 points, thus obtaining a group of fifth data sequences. Since the serial connection interval between the subsymbols is only 1/M of one subsymbol length, the subsymbols may have overlapping parts in the time domain, but may not affect data transmission.

It can be understood that since the M-times oversampling can increase the length of the subsymbol, if the serial connection interval between the subsymbols is one subsymbol length, making two **IFFTs** equivalent to one **IFFT** cannot be achieved. If the subsymbols are connected in series and superposed at the interval of 1/M of one subsymbol length, two **IFFTs** can be equivalent to one **IFFT,** which improves the processing flexibility and reduces the processing delay.

In an embodiment, the X subsymbols are connected in series in the time domain, to obtain a group of sixth data sequences, which includes: Each subsymbol is repeatedly expanded by Y times, wherein Y is a positive integer; and the repeatedly expanded subsymbols are connected in series in the time domain, to obtain the group of sixth data sequences.

Exemplarily, each of the four groups of third data sequences contains 128 pieces of data. Data in first columns in the first, second, third, and fourth groups of fourth data sequences are used to obtain a first group of fifth data sequences. Then, data in second columns of the first, second, third, and fourth groups of fourth data sequences are used to obtain a second group of fifth data sequences, and so on, thus obtaining 128 groups of fifth data sequences. 16-point inverse fast Fourier transform of 4-times oversampling is performed on each group of fifth data sequences, to obtain 128 subsymbols. A length of each subsymbol is 16 points. Subsymbol 1 is repeatedly expanded by four times to form duplicate subsymbol 1 with a length of 64 points. The duplicate subsymbol 1 is formed by connecting four identical subsymbols 1 in series, and so on, thus obtaining 128 duplicate subsymbols. The 128 duplicate subsymbols are connected in series in the time domain to obtain a group of sixth data sequences. A serial connection time interval between the duplicate subsymbols is 4 points, which is 1/4 of one subsymbol length.

By repeatedly extending each subsymbol, the length of the subsymbol can reach a length of a filter, making it easier for a filtering operation on the subsymbol through the filter subsequently. It can be understood that a multiple of repeated expansion of each subsymbol can be adjusted according to a length required by the filter.

In an embodiment, a quantity of points for performing inverse fast Fourier transform on each group of fifth data sequences is the same as the quantity of the data contained in the corresponding group.

In an embodiment, a quantity of points for performing inverse fast Fourier transform on each group of fifth data sequences is greater than N. The quantity of points for performing inverse fast Fourier transform on each group of fifth data sequences is greater than or equal to M.

In an embodiment, in a case that the fourth data sequences are composed of the N groups of third data sequences and the P groups of seventh data sequences, namely, there are N+P groups of fourth data sequences. A quantity of data of each group of fifth data sequences is N+P. A quantity of points for performing inverse fast Fourier transform on each group of fifth data sequences is greater than N+P. The quantity of points for performing inverse fast Fourier transform on each group of fifth data sequences is greater than or equal to M. P is an integer greater than or equal to 1.

Since the quantity of points for performing inverse fast Fourier transform on the fifth data sequences is greater than the quantity of the data of each group of fifth data sequences, and the quantity of points for performing inverse fast Fourier transform on each group of fifth data sequences is greater than or equal to M, it is ensured that a data interval in the time domain is less than or equal to the serial connection interval during subsequent serial connection of the subsymbols.

In an embodiment, the sixth data sequences are filtered or windowed; and the filtered or windowed sixth data sequences are transmitted in the time domain.

In an embodiment, the filtering is single-phase filtering or multiphase filtering. The multiphase filtering is respectively filtering the X subsymbols of the sixth data sequences.

In an embodiment, a filtering function used in the multiphase filtering includes but is not limited to any of the following: a root raised cosine function, a raised cosine function, a rectangular function, an isotropic orthogonal transform algorithm (IOTA) function, and the like.

In an embodiment, the sixth data sequences are windowed, which includes: The sixth data sequences are grouped; periodic extension is performed on the groups of data; and dot multiplication is performed on the groups of data by a preset function; and finally, staggered superposition is performed between the groups of data.

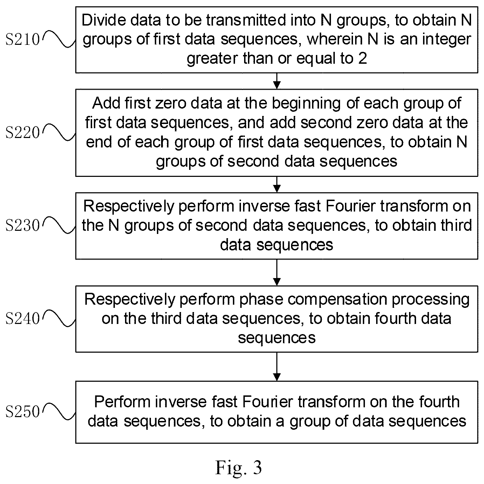

Fig. 3 is a flowchart of a data processing method according to an embodiment of the present invention. As shown in Fig. 3, the data transmission method can be applied to, but is not limited to, a base station, a terminal, or the communication system shown in Fig. 1. In this embodiment of Fig. 3, the data processing method may include, but is not limited to, S210, S220, S230, S240, and S250.

S210: Data to be transmitted is divided into N groups, to obtain N groups of first data sequences, wherein N is an integer greater than or equal to 2.

In an embodiment, a quantity of data in each group of first data sequences satisfies 2 to the power of i, where i is an integer.

In an embodiment, in the N groups of first data sequences, a ratio of quantities of data of at least some groups of first data sequences satisfies 2 to the power of i, wherein i is an integer.

In an embodiment, in the N groups of first data sequences, quantities of data of at least some groups of first data sequences are the same.

S220: First zero data is added at the beginning of each group of first data sequences, and second zero data is added at the end of each group of first data sequences, to obtain N groups of second data sequences.

In an embodiment, a sum of a quantity of the first zero data and a quantity of the second zero data is an integral multiple of a quantity of data of each corresponding group.

In an embodiment, the quantity of the first zero data is equal to the quantity of the second zero data.

In an embodiment, a quantity of data in each group of second data sequences satisfies 2 to the power of i, where i is an integer. Since the quantity of the data in each group of second data sequences satisfies 2 to the power of i, inverse fast Fourier transform can be respectively performed on each group of second data sequences, to improve the computation efficiency.

In an embodiment, in the N groups of second data sequences, a ratio of quantities of data of at least some groups of second data sequences satisfies 2 to the power of i, wherein i is an integer.

In an embodiment, in the N groups of first data sequences, quantities of data of at least some groups of second data sequences are the same.

In an embodiment, a quantity of data in each group of second data sequences is the same.

S230: Inverse fast Fourier transform is respectively performed on the N groups of second data sequences, to obtain third data sequences.

S240: Phase compensation processing is respectively performed on the third data sequences, to obtain fourth data sequences.

S250: Inverse fast Fourier transform is performed on the fourth data sequences, to obtain a group of data sequences.

It can be understood that the data processing method of this embodiment of the present invention is the same as the corresponding steps in the data transmission method in the above embodiments in terms of implementation details, and will not be elaborated here.

The data transmission method and the data processing method of the present invention will be overall specifically explained below through examples. It can be understood that the following embodiments are intended to better illustrate the data transmission method and the data processing method of the present invention, and do not impose specific limitations.

Example 1:

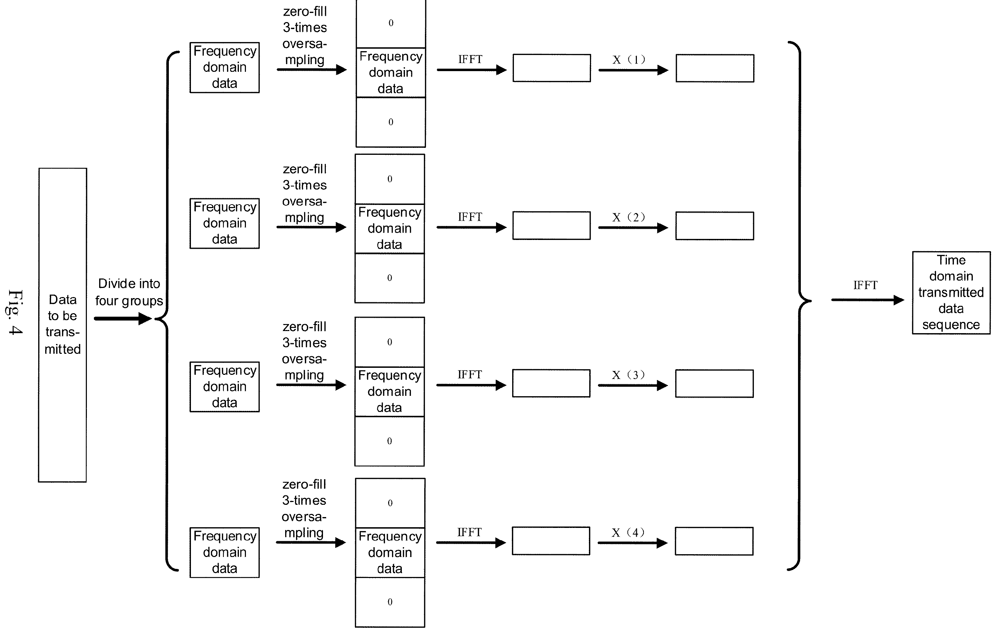

Fig. 4 is a schematic diagram of a data transmission process of performing frequency domain 3-times oversampling according to an example of the present invention. As shown in Fig. 4, the data transmission process provided in this example at least includes the following steps:

Data to be transmitted is divided into four groups, so that four groups of first data sequences are obtained. Each group of first data sequences contains 36 pieces of data. 36 pieces of zero data are added to each of the beginning and end of each group of first data sequences, to obtain four groups of second data sequences. A quantity of data contained in each group of second data sequences is the same, and is 108.

108-point inverse fast Fourier transform is performed on each group of second data sequences, to obtain four groups of third data sequences. A first group of third data sequences in the four groups of third data sequences is multiplied by a coefficient group $X(1)=[1, 1, 1, ..., 1]$; a second group of third data sequences is multiplied by a coefficient group $X(2)=[1, \exp(\pi i/3), \exp(2\pi i/3), ..., \exp(127\pi i/3)]$; a third group of third data sequences is multiplied by a coefficient group $X(3)=[1, \exp(2\pi i/3), \exp(2*2\pi i/3), ..., \exp(127*2\pi i/3)]$; and a fourth group of third data sequences is multiplied by a coefficient group $X(4)=[1, 1, 1, ..., 1]$, to obtain four groups of fourth data sequences.

Data in the same number of columns in the four groups of fourth data sequence is used as a group of fifth data sequences. If data in first columns of the four groups of fourth data sequences are extracted, a first group of fifth data sequences is obtained, thus obtaining a total of 108 groups of fifth data sequences. Inverse fast Fourier transform of zero-fill oversampling is performed on the 108 groups of fifth data sequences to obtain 108 subsymbols. The 108 subsymbols are connected in series and superposed in the time domain. The subsymbols are spaced apart by one third of one subsymbol length to obtain a group of sixth data sequences. The sixth data sequence is a group of time domain transmitted data sequences. The time domain transmitted data sequences are transmitted on time domain resources.

Since the data to be transmitted is divided into four groups for processing, long data is converted into four groups of short data for processing, which reduces the data processing complexity, improves the processing efficiency of each group of data, and reducing the data processing delay. By adding the zero data at two ends of each group of data for frequency domain 3-times oversampling, out-of-band leakage can be reduced; interference between different groups of data in the frequency domain can be reduced; guard intervals can be reduced; and the spectrum efficiency can be improved. Furthermore, the 108 subsymbols are connected in series and superposed in the time domain at an interval of one third of one subsymbol length, a result obtained by performing two inverse fast Fourier transforms on the oversampled data is equivalent to a result obtained by performing one inverse Fourier transform, thereby reducing the data processing complexity, reducing the processing delay, and improving the processing efficiency. The four groups of third data sequences are multiplied by the coefficient groups, which can compensate for phase changes caused by serial connection at the interval of one third of one subsymbol length and cause a receiving end to recover original frequency domain data.

Example 2:

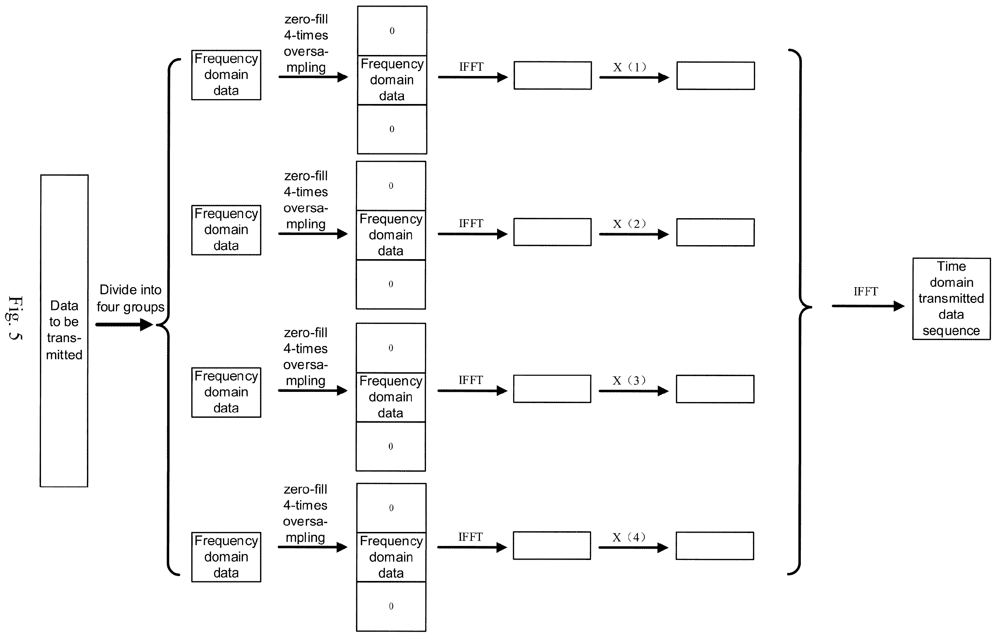

Fig. 5 is a schematic diagram of a data transmission process of performing frequency domain 4-times oversampling according to an example of the present invention. As shown in Fig. 5, the data transmission process provided in this example at least includes the following steps:
Data to be transmitted is divided into four groups, so that four groups of first data sequences are obtained. Each group of first data sequences contains 36 pieces of data. 48 pieces of zero data are added to each of the beginning and end of each group of first data sequences, to obtain four groups of second data sequences. A quantity of data contained in each group of second data sequences is the same, which is 128.

128-point IFFT is performed on each group of second data sequences, to obtain four groups of third data sequences. A first group of third data sequences in the four groups of third data sequences is multiplied by a coefficient group $X(1)=[1, 1, 1, ..., 1]$; a second group of third data sequences is multiplied by a coefficient group $X(2)=[1, \exp(\pi i/2), \exp(2\pi i/2), ..., \exp(127\pi i/2)]$; a third group of third data sequences is multiplied by a coefficient group $X(3)=[1, \exp(\pi i), \exp(2\pi i), ..., \exp(127\pi i)]$; and a fourth group of third data sequences is multiplied by a coefficient group $X(4)=[1, \exp(3\pi i/2), \exp(6\pi i/2), ..., \exp(3*127\pi i/2)]$, to obtain four groups of fourth data sequences.

128 groups of fifth data sequences are obtained according to data in the same columns in the four groups of fourth data sequences. Inverse fast Fourier transform of zero-fill oversampling is performed on the fifth data sequences to obtain 128 subsymbols. The 128 subsymbols are connected in series and superposed in the time domain. The subsymbols are spaced apart by one fourth of one subsymbol length to obtain a group of sixth data sequences. The sixth data sequence is a group of time domain transmitted data sequences. The time domain transmitted data sequences are transmitted on time domain resources.

By adding the zero data at two ends of each group of data for frequency domain 4-times oversampling, out-of-band leakage can be reduced; interference between different groups of data in the frequency domain can be reduced; guard intervals can be reduced; and the spectrum efficiency can be improved. Furthermore, the quantity of the data in each group of second data sequences satisfies 2 to the power of i, i being an integer, which can make the computation of the inverse fast Fourier transform on each group of second data sequence easier, make the inverse fast Fourier transform faster, and improve the data processing efficiency.

Example 3:

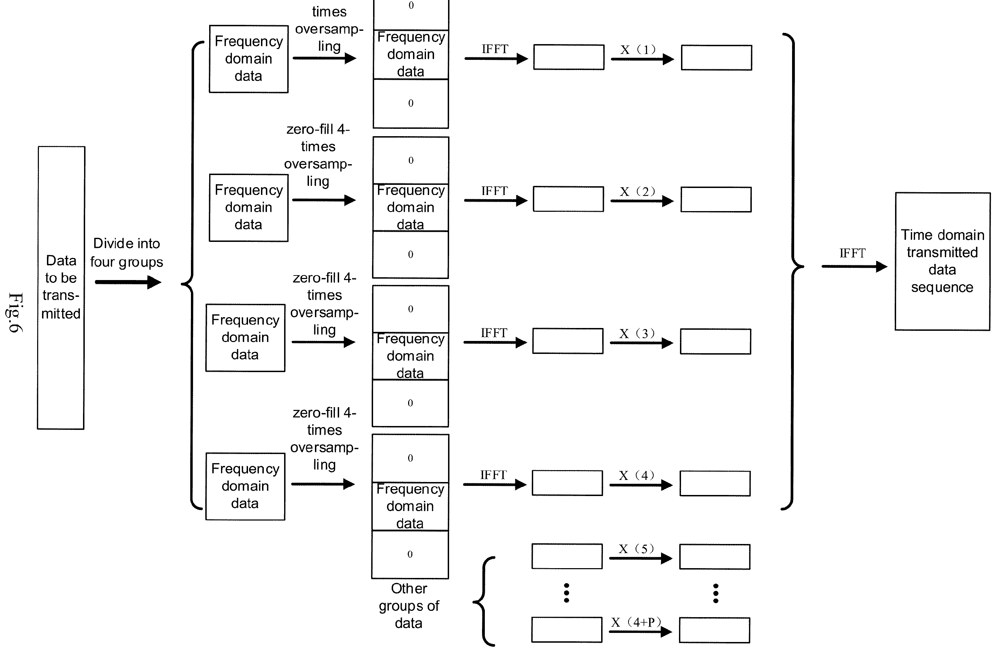

Fig. 6 is a schematic diagram of a data transmission process together with other groups of data according to this example. As shown in Fig. 6, the data transmission process provided in this example at least includes the following steps:
Data to be transmitted is divided into four groups, so that four groups of first data sequences are obtained. Each group of first data sequences contains 36 pieces of data. 48 pieces of zero data are added to each of the beginning and end of each group of first data sequences, to obtain four groups of second data sequences. A quantity of data contained in each group of second data sequences is the same, which is 128.

128-point **IFFT** is performed on each group of second data sequences, to obtain four groups of third data sequences. A first group of third data sequences in the four groups of third data sequences is multiplied by a coefficient group $X(1)=[1, 1, 1, ..., 1]$; a second group of third data sequences is multiplied by a coefficient group $X(2)=[1, \exp(\pi i/2), \exp(2\pi i/2), ..., \exp(127\pi i/2)]$; a third group of third data sequences is multiplied by a coefficient group $X(3)=[1, \exp(\pi i), \exp(2\pi i), ..., \exp(127\pi i)]$; and a fourth group of third data sequences is multiplied by a coefficient group $X(4)=[1, \exp(3\pi i/2), \exp(6\pi i/2), ..., \exp(3*127\pi i/2)]$. Other P groups of seventh data sequences are data generated by one inverse fast Fourier transform of 4-times oversampling, and the data to be transmitted does not include the seventh data sequences. A quantity of data contained in each group of seventh data sequences is also 128. The P groups of seventh data sequences are multiplied by coefficient groups for phase compensation processing. A p-th group of seventh data sequences is multiplied by a coefficient group $X(4+p)=[1, \exp((3+p)\pi i/2), \exp(2*(3+p)\pi i/2), ..., \exp(127*(3+p)\pi i/2)]$, p = 1, 2, ..., P.

The four groups of third data sequences after phase compensation processing and the P groups of seventh data sequences after phase compensation processing form 4+P groups of fourth data sequences together.

128 groups of fifth data sequences are obtained according to data in the same columns in the 4+P groups of fourth data sequences. Inverse fast Fourier transform of zero-fill oversampling is performed on the fifth data sequences to obtain 128 subsymbols. The 128 subsymbols are connected in series and superposed in the time domain. The subsymbols are spaced apart by one fourth of one subsymbol length to obtain a group of sixth data sequences. The sixth data sequence is a group of time domain transmitted data sequences. The time domain transmitted data sequences are transmitted on time domain resources.

The fourth data sequences are obtained by respectively performing the phase compensation processing on the third data sequences and the seventh data sequences, and the fourth data sequences and data other than the data to be transmitted are subjected to inverse fast Fourier transform together, which improves the data processing flexibility.

Example 4:

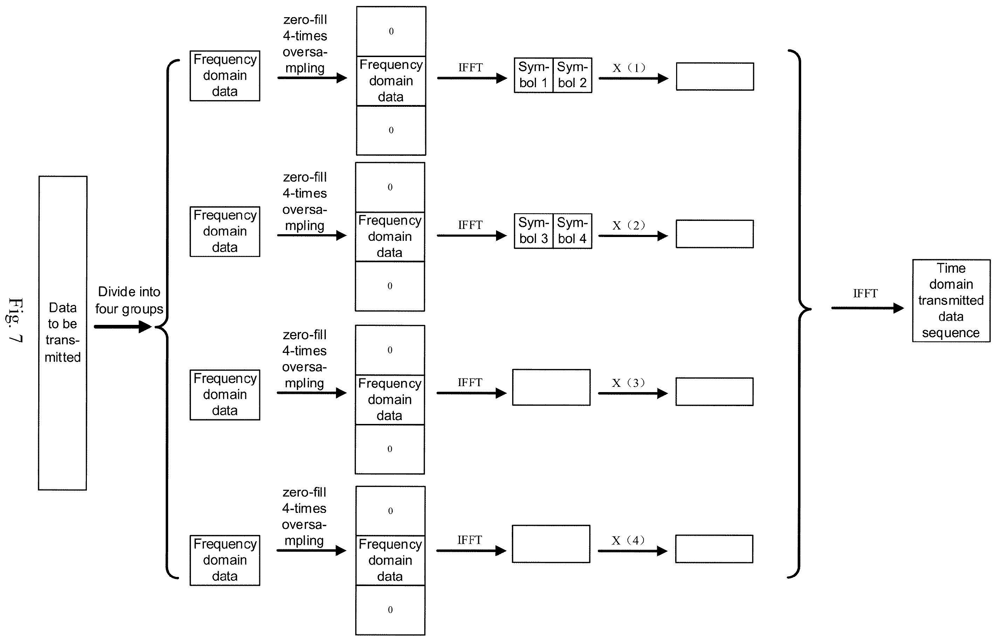

Fig. 7 is a schematic diagram of a data transmission process of other filled data according to this example. As shown in Fig. 7, the data transmission process provided in this example at least includes the following steps:

Data to be transmitted are divided into four groups, so that four groups of first data sequences are obtained. Each of a first group of first data sequences and a second group of first data sequences contains 16 pieces of data, and each of a third group of first data sequences and a fourth group of first data sequences contains 32 pieces of data. 24 pieces of zero data are added to each of the beginning and end of the first group of first data sequences and the second group of first data sequences, and 48 pieces of zero data are added to each of the beginning and end of the third group of first data sequences and the fourth group of first data sequences, to obtain four groups of second data sequences. A ratio of quantities of data of the four groups of second data sequences formed by adding the zero data is 1: 1: 2: 2, with an order from the first group of first data sequences to the fourth group of first data sequences. The ratio of the quantity of the data of each group of first data sequences satisfies 2 to the power of i (2 to the power of 0 and 2 to the power of 1).

64-point IFFT is respectively performed on first and second groups of second data sequences. The first group of second data sequences subjected to IFFT is used as symbol 1, and another group of time domain data sequences subjected to one inverse fast Fourier transform of 4-times oversampling and containing 64 pieces of data is used as symbol 2. It can be understood that the time domain data sequences corresponding to symbol 2 are not data in the data to be transmitted. Symbol 1 and symbol 2 are connected in series to obtain a first group of third data sequences. The first group of third data sequences contains 128 pieces of data. The second group of second data sequences subjected to IFFT is used as symbol 3. Time domain data sequences containing 64 pieces of zero data is used as symbol 4. Symbol 3 and symbol 4 are connected in series to obtain a second group of third data sequences. The second group of third data sequences contains 128 pieces of data. 128-point IFFT is respectively performed on the third group of second data sequences and the fourth group of second data sequences, to obtain a third group of third data sequences and a fourth group of third data sequences. A quantity of data contained in each of the third group of third data sequences and the fourth group of third data sequences is the same as the quantity of the data contained in each of the first group of third data sequences and the second group of third data sequences.

The four groups of third data sequences are multiplied by a coefficient group X(n), wherein the first group of third data sequences is multiplied by a coefficient group X(1)=[1, 1, 1, ..., 1]; the second group of third data sequences is multiplied by a coefficient group X(2)=[1, exp($\pi$i/2), exp(2$\pi$i/2), ..., exp(127$\pi$i/2)]; the third group of third data sequences is multiplied by a coefficient group X(3)=[1, exp($\pi$i), exp(2$\pi$i), ..., exp(127$\pi$i)]; and a fourth group of third data sequences is multiplied by a coefficient group X(4)=[1, exp(3$\pi$i/2), exp(6$\pi$i/2), ..., exp(3*127$\pi$i/2)], to obtain four groups of fourth data sequences.

128 groups of fifth data sequences are obtained according to data in the same columns in the four groups of fourth data sequences. Inverse fast Fourier transform of zero-fill oversampling is performed on the fifth data sequences to obtain 128 subsymbols. The 128 subsymbols are connected in series in the time domain to form a group of time domain transmitted data sequences. Each subsymbol is spaced apart by one fourth of one subsymbol length.

The second data sequences subjected to IFFT are connected in series with another group of time domain data or zero data subjected to IFFT, so that the quantity of the data of each group of third data sequences finally obtained is the same, which makes data preparation in advance for subsequently obtaining fifth data sequences according to data in the same columns of the fourth data sequences, and facilitates subsequent second inverse fast Fourier transform on the groups together.

Example 5:

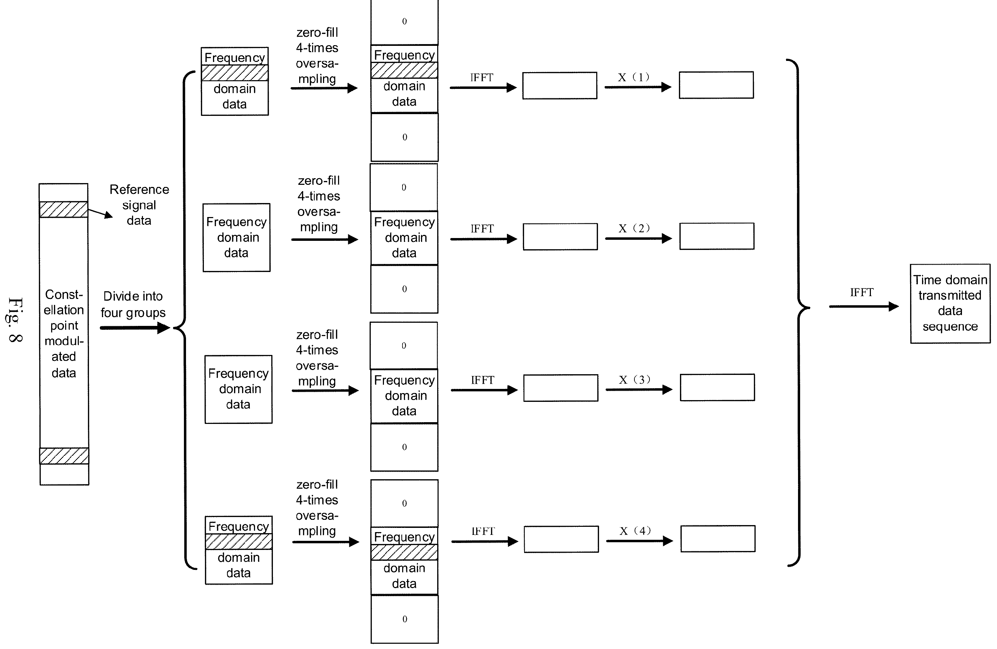

Fig. 8 is a schematic diagram of a data transmission process of constellation point modulated data according to this example. As shown in Fig. 8, the data transmission process provided in this example at least includes the following steps:

Data to be transmitted of this example is the constellation point modulated data. A front part and back part of the constellation point modulated data carry reference signal data. The constellation point modulated data is divided into four groups, so that four groups of first data sequences are obtained. Each group of first data sequences contains 32 pieces of data. The reference signal data is classified into a first group of first data sequences and a fourth group of first data sequences. 48 pieces of zero data are added to each of the beginning and end of each group of first data sequences, to obtain four groups of second data sequences. A quantity of data contained in each group of second data sequences is the same, which is 128 and satisfies 2 to the power of i (2 to the power of 7).

128-point IFFT is performed on each group of second data sequences, to obtain four groups of third data sequences. A first group of third data sequences in the four groups of third data sequences is multiplied by a coefficient group X(1)=[1, 1, 1, ..., 1]; a second group of third data sequences is multiplied by a coefficient group X(2)=[1, exp($\pi$i/2), exp(2$\pi$i/2), ..., exp(127$\pi$i/2)]; a third group of third data sequences is multiplied by a coefficient group X(3)=[1, exp($\pi$i),

exp(2πi), ..., exp(127πi)]; and a fourth group of third data sequences is multiplied by a coefficient group X(4)=[1, exp(3πi/2), exp(6πi/2), ..., exp(3*127πi/2)], to obtain four groups of fourth data sequences.

128 groups of fifth data sequences are obtained according to data in the same columns in the four groups of fourth data sequences. Inverse fast Fourier transform of zero-fill oversampling is performed on the fifth data sequences to obtain 128 subsymbols. The 128 subsymbols are connected in series in the time domain to form a group of time domain transmitted data sequences. Each subsymbol is spaced apart by one fourth of one subsymbol length.

The data to be transmitted in this example can include the constellation point modulated data and the reference signal data. By grouping the data to be transmitted containing the constellation point modulated data and the reference signal data and performing two IFFTs, the two IFFTs are equivalent to one IFFT, which does not affect the integrities of the constellation point modulated data and the reference signal data in the data to be transmitted. Similarly, the integrity of other data in the data to be transmitted cannot be affected.

Example 6:

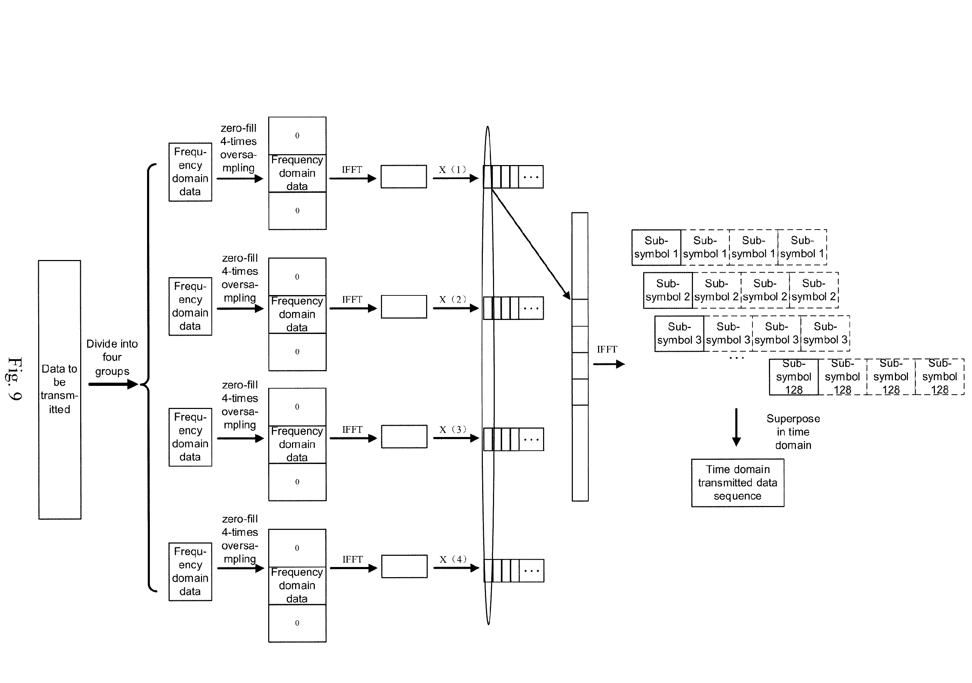

Fig. 9 is a schematic diagram of a data transmission process of two inverse fast Fourier transforms according to an example of the present invention. As shown in Fig. 9, the data transmission process provided in this example at least includes the following steps:

Data to be transmitted is divided into four groups, so that four groups of first data sequences are obtained. Each group of first data sequences contains 36 pieces of data. 48 pieces of zero data are added to each of the beginning and end of each group of first data sequences, to obtain four groups of second data sequences. A quantity of data contained in each group of second data sequences is the same, which is 128 and satisfies 2 to the power of i (2 to the power of 7).

128-point IFFT is performed on each group of second data sequences, to obtain four groups of third data sequences. A first group of third data sequences in the four groups of third data sequences is multiplied by a coefficient group X(1)=[1, 1, 1, ..., 1]; a second group of third data sequences is multiplied by a coefficient group X(2)=[1, exp(πi/2), exp(2πi/2), ..., exp(127πi/2)]; a third group of third data sequences is multiplied by a coefficient group X(3)=[1, exp(πi), exp(2πi), ..., exp(127πi)]; and a fourth group of third data sequences is multiplied by a coefficient group X(4)=[1, exp(3πi/2), exp(6πi/2), ..., exp(3*127πi/2)], to obtain four groups of fourth data sequences.

128 groups of fifth data sequences are obtained according to data in the same columns in the four groups of fourth data sequences. Six pieces of zero data are added to each of the beginning and end of each group of fifth data sequences, to obtain 128 groups of zero-filled fifth data sequences. 16-point IFFT is respectively performed on each group of zero-filled fifth data sequences, to obtain 128 subsymbols. Then, the 128 subsymbols are respectively repeatedly expanded by four times, namely, each subsymbol is duplicated for 4 times and is connected in series, to obtain duplicate subsymbols containing 64 pieces of data. Each duplicate subsymbol contains four identical subsymbols, thus obtaining 128 groups of duplicate subsymbols. The 128 duplicate subsymbols are connected in series in the time domain to form a group of time domain transmitted data sequences, namely, sixth data sequences. A serial connection interval in each group of duplicate subsymbols is four points, which is 1/4 of a subsymbol length.

The serial connection interval between each subsymbol is 1/M of one subsymbol length, so that an effect achieved by performing two IFFTs on the oversampled data is equivalent to an effect achieved by performing one IFFT, which improves the data processing flexibility and reduces the processing delay. By repeatedly extending each subsymbol, the length of the subsymbol can reach a length of a filter, making it easier for a filtering operation on the subsymbol through the filter subsequently. It can be understood that a multiple of repeated expansion of each subsymbol can be adjusted according to a length required by the filter.

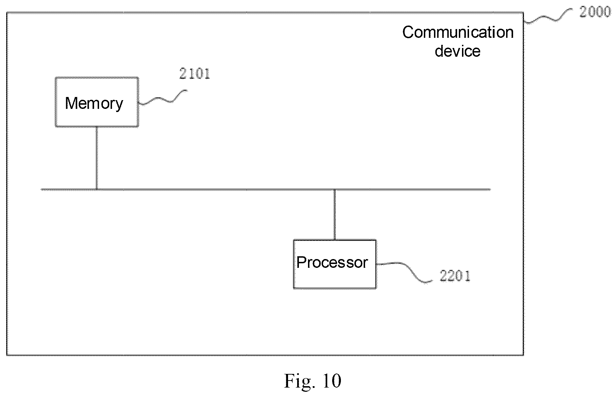

Fig. 10 is a schematic structural diagram of a communication device according to an embodiment of the present invention. As shown in Fig. 10, the communication device 2000 includes a memory 2100 and a processor 2200. There may be one or more memories 2100 and one or more processors 2200. Fig. 10 shows one memory 2101 and one processor 2201. The memory 2101 and the processor 2201 in a network device can be connected through a bus or in another way. In Fig. 10, bus connection is taken for example.

The memory 2101, as a computer-readable storage medium, can be configured to store a software program, a computer-executable program, and modules, such as program instructions/modules corresponding to the method provided in any embodiment of the present invention. The processor 2201 implements the data transmission method or the data processing method provided in any of the above embodiments by running the software program, the instructions, and the modules stored in the memory 2101.

The memory 2101 may mainly include a program storage region and a data storage region. The program storage region may store an operating system and an application program required by at least one function. In addition, the memory 2101 may include a high speed random access memory, and may further include a non-volatile memory, such as at least one magnetic disk storage device, a flash memory, or another non-volatile solid storage device. In some instances, the memory 2101 further includes a memory remotely located with respect to the processor 2201. These remote memories can be connected to a device through a network. Examples of the above network include, but are not limited to, Internets, intranets, local area networks, mobile communication networks, and combinations thereof.

An embodiment of the present invention further provides a computer-readable storage medium, having a computer-executable instruction stored therein. The computer-executable instruction is used for performing the data transmission method or the data processing method provided in any embodiment of the present invention.

An embodiment of the present invention further discloses a computer program product, including a computer program or a computer instruction. The computer program or the computer instruction is stored in a computer-readable storage medium. A processor of a computer device reads the computer program or the computer instruction from the computer-readable storage medium, and the processor runs the computer program or the computer instruction, to cause the computer device to perform the data transmission method provided in any embodiment of the present invention, or the data processing method provided in any embodiment of the present invention.

The system architecture and application scenarios described in the embodiments of the present invention are for more clearly describing the technical solutions in the embodiments of the present invention does not constitute a limitation on the technical solutions provided in the embodiments of the present invention. Those skilled in the art can learn that, with evolution of the system architecture and new application scenarios, the technical solutions provided in the embodiments of the present invention are also applicable to a similar technical problem.

A person of ordinary skill in the art can understand that all or some steps, systems, and functional modules/units in a device in the disclosed method mentioned above can be implemented as software, firmware, hardware, and their appropriate combinations.

In hardware implementation, the division between the functional modules/units mentioned in the above description does not necessarily correspond to the division of physical components. For example, a physical component can have multiple functions, or a function or step can be performed collaboratively by several physical components. Some or all physical components can be implemented as software executed by a processor, such as a central processing unit, a digital signal processor, or a microprocessor, or as hardware, or as integrated circuits, such as dedicated integrated circuits. Such software can be distributed on a computer-readable medium. The computer-readable medium may include a computer storage medium (or non-transient medium) and a communication medium (or transient medium). As known to a person of ordinary skill in the art, the term, computer storage medium, includes volatile and non-volatile media, and removable and non-removable media implemented by using any method or technology used for storing information (such as computer-readable instructions, data structures, program modules, or other data). The computer storage media include but are not limited to a random access memory (RAM), a read only memory (ROM), an electrically erasable programmable read only memory (EEPROM), a flash memory or other storage technologies, a CD-ROM, a digital versatile disc (DVD) or other optical disc storages, a cassette, a magnetic tape, a disk storage or other magnetic storage devices, or any other media that can be used for storing desired information and can be accessed by computers. In addition, it is well known to a person of ordinary skill in the art that the communication media typically include computer-readable instructions, data structures, program modules, or other data in modulated data signals such as carriers or other transmission mechanisms, and may include any information delivery medium.

The terms "component", "module", "system", etc. used in this specification are used to represent computer-related entities, hardware, firmware, combinations of hardware and software, software, or being executed software. For example, a component can be, but is not limited to, a process run on a processor, a processor, an object, an executable file, an execution thread, a program, or a computer. Through the diagrams, both applications run on a computing device and the computing device can be components. One or more components can reside in a process or an execution thread, and the components can be located on one computer or distributed between two or more computers. In addition, these components can be executed from various computer-readable media having various data structures stored therein. Components may communicate via, for example, a local or remote process according to a signal having one or more data packets (e. g. data from two components interacting with another component between a local system, a distributed system, or a network, such as an Internet interacting with another system via a signal).

The above describes some embodiments of the present invention with reference to the accompanying drawings and does not limit the scope of the claims of the present invention. Any modifications, equivalent replacements, and improvements that are made by those skilled in the art without departing from the scope and essence of the present invention shall all fall within the scope of the claims of the present invention.

**Claims**

1. A data transmission method, comprising:

    dividing data to be transmitted into N groups, to obtain N groups of first data sequences, wherein N is an integer greater than or equal to 2;
    respectively performing M-times oversampling on each group of first data sequences, to obtain N groups of second data sequences, wherein M is an integer greater than or equal to 3;
respectively performing inverse fast Fourier transform on the N groups of second data sequences, to obtain third data sequences;
respectively performing phase compensation processing on the third data sequences, to obtain fourth data sequences; and
performing inverse fast Fourier transform on the fourth data sequences, to obtain a group of data sequences, and transmitting the group of data sequences on a time-frequency resource.

2. The method according to claim 1, wherein the respectively performing phase compensation processing on the third data sequences, to obtain fourth data sequences, comprising:
respectively performing phase compensation processing on the third data sequences according to the M, the N, and a data position of the third data sequences, to obtain the fourth data sequences.

3. The method according to claim 1, wherein

a quantity of data contained in each group of first data sequences is 2 to the power of i;
or, a quantity of data contained in each group of second data sequences is 2 to the power of i.

4. The method according to claim 3, wherein
in the N groups of first data sequences, quantities of data contained in at least some groups satisfy one of the following conditions:

the quantities of the data are the same; or
a ratio of the quantities of the data is 2 to the power of i.

5. The method according to claim 3, wherein
in the N groups of second data sequences, quantities of data contained in at least some groups satisfy one of the following conditions:

the quantities of the data are the same; or
a ratio of the quantities of the data is 2 to the power of i.

6. The method according to claim 1, wherein the respectively performing M-times oversampling on each group of first data sequences, to obtain N groups of second data sequences, comprising:
adding first zero data at the beginning of each group of first data sequences, and adding second zero data at the end of each group of first data sequences, to obtain the N groups of second data sequences, wherein a sum of a quantity of the first zero data and a quantity of the second zero data is R times of a quantity of data of each corresponding group; and R is a positive integer and is a difference between M and 1.

7. The method according to claim 6, wherein
the quantity of the first zero data is equal to the quantity of the second zero data.

8. The method according to claim 6 or 7, wherein
a quantity of data of each group of second data sequences is the same as a quantity of data of each corresponding group of third data sequences obtained after inverse fast Fourier transform is performed.

9. The method according to claim 6 or 7, wherein

a quantity of data of at least one group of third data sequences is different from a quantity of data of another group of third data sequences; and
a ratio of quantities of data of the groups of third data sequences is 2 to the power of i, wherein i is a natural number.

10. The method according to any one of claims 1 to 7, wherein

the N groups of first data sequences are respectively transmitted in N frequency domain resource blocks; and
each resource block comprises sub-carriers, wherein a quantity of the sub-carriers is equal to the quantity of the data contained in each group of first data sequence.

11. The method according to any one of claims 1 to 7, wherein
during the respectively performing inverse fast Fourier transform on the N groups of first data sequences, zero-frequency positions of each group of inverse fast Fourier transform data are in the corresponding frequency domain resource blocks, and the zero-frequency positions of each group of inverse fast Fourier transform data during the inverse fast Fourier transform are different; and each zero-frequency position is in one of the sub-carriers of the frequency domain resource blocks corresponding to each group of inverse fast Fourier transform data.

12. The method according to claim 11, wherein
the frequency domain resource blocks corresponding to each group of inverse fast Fourier transform data are all or part of frequency domain resource blocks in a channel bandwidth, and the data to be transmitted is all or part of data to be transmitted in the channel bandwidth.

13. The method according to any one of claims 1 to 7, wherein the performing inverse fast Fourier transform on the fourth data sequences, to obtain a group of data sequences, comprising:
performing inverse fast Fourier transform of zero-fill oversampling on the fourth data sequences, to obtain the group of data sequences.

14. The method according to any one of claims 1 to 7, wherein the performing inverse fast Fourier transform on the fourth data sequences, to obtain a group of data sequences, and transmitting the group of data sequences on a time-frequency resource, comprising:

   obtaining X groups of fifth data sequences according to data in the same number of columns in the fourth data sequences, wherein X is a quantity of columns of the fourth data sequences;
   respectively performing inverse fast Fourier transform on the X groups of fifth data sequences, to obtain X subsymbols;
   connecting the X subsymbols in series in a time domain, to obtain a group of sixth data sequences; and
   transmitting the sixth data sequences in the time domain.

15. The method according to any one of claims 1 to 7, wherein the respectively performing phase compensation processing on the third data sequences, to obtain fourth data sequences, comprising:
respectively performing phase compensation processing on the third data sequences and seventh data sequence, to obtain the fourth data sequences, wherein the data to be transmitted does not comprise the seventh data sequence.

16. The method according to claim 15, wherein
the seventh data sequence is data that is generated by one inverse fast Fourier transform of M-times oversampling.

17. The method according to any one of claims 1 to 7, wherein respectively performing inverse fast Fourier transform on the N groups of second data sequences, to obtain third data sequences, further comprising :

   respectively performing inverse fast Fourier transform on the N groups of second data sequences; and
   adding time domain data into at least one of the N groups of second data sequences subjected to the inverse fast Fourier transform, to obtain the third group data sequences, wherein the time domain data is time domain data generated by inverse fast Fourier transform, and a quantity of data in each group of third data sequences is the same.

18. The method according to any one of claims 1 to 7, wherein the data to be transmitted at least comprises one of the following:

   constellation point modulated data; and
   reference signal data.

19. The method according to claim 14, wherein the connecting the X subsymbols in series in a time domain, to obtain a group of sixth data sequences, comprising:

   repeatedly expanding each subsymbol by Y times, wherein Y is a positive integer; and
   connecting the repeatedly expanded subsymbols in series in the time domain, to obtain the group of sixth data sequences.

20. The method according to claim 14, wherein the transmitting the sixth data sequences in the time domain, comprising:

    filtering or windowing the sixth data sequences; and
    transmitting the filtered or windowed sixth data sequences in the time domain.

21. A data processing method, comprising:

    dividing data to be transmitted into N groups, to obtain N groups of first data sequences, wherein N is an integer greater than or equal to 2;
    adding first zero data at the beginning of each group of first data sequences, and adding second zero data at the end of each group of first data sequences, to obtain N groups of second data sequences;
    respectively performing inverse fast Fourier transform on the N groups of second data sequences, to obtain third data sequences;
    respectively performing phase compensation processing on the third data sequences, to obtain fourth data sequences; and
    performing inverse fast Fourier transform on the fourth data sequences, to obtain a group of data sequences.

22. The method according to claim 21, wherein a sum of a quantity of the first zero data and a quantity of the second zero data is an integral multiple of a quantity of data of each corresponding group.

23. The method according to claim 21 or 22, wherein

    a quantity of data contained in each group of first data sequences is 2 to the power of i;
    or, a quantity of data contained in each group of second data sequences is 2 to the power of i.

24. The method according to claim 21 or 22, wherein
    in the N groups of first data sequences, quantities of data contained in at least some groups satisfy one of the following conditions:

    the quantities of the data are the same; or
    a ratio of the quantities of the data is 2 to the power of i.

25. The method according to claim 21 or 22, wherein
    in the N groups of second data sequences, quantities of data contained in at least some groups satisfy one of the following conditions:

    the quantities of the data are the same; or
    a ratio of the quantities of the data is 2 to the power of i.

26. A communication device, comprising: a memory, a processor, and a computer program stored on the memory and runnable on the processor, wherein the processor performs the computer program to implement the data transmission method according to any one of claims 1 to 20, or the data processing method according to any one of claims 21 to 25.

27. A computer-readable storage medium, the computer-readable storage medium comprises a computer-executable instruction stored, wherein the computer-executable instruction is used for performing the data transmission method according to any one of claims 1 to 20, or the data processing method according to any one of claims 21 to 25.

28. A computer program product, comprising a computer program or a computer instruction, wherein the computer program or the computer instruction is stored in a computer-readable storage medium; a processor of a computer device reads the computer program or the computer instruction from the computer-readable storage medium, and the processor performs the computer program or the computer instruction, to cause the computer device to perform the data transmission method according to any one of claims 1 to 20, or the data processing method according to any one of claims 21 to 25.

Fig. 1

S110 — Divide data to be transmitted into N groups, to obtain N groups of first data sequences, wherein N is an integer greater than or equal to 2

S120 — Respectively perform M-times oversampling on each group of first data sequences, to obtain N groups of second data sequences, wherein M is an integer greater than or equal to 3

S130 — Respectively perform inverse fast Fourier transform on the N groups of second data sequences, to obtain third data sequences

S140 — Respectively perform phase compensation processing on the third data sequences, to obtain fourth data sequences

S150 — Perform inverse fast Fourier transform on the fourth data sequences, to obtain a group of data sequences, and transmit the group of data sequences on a time-frequency resource

Fig. 2

| S210 | Divide data to be transmitted into N groups, to obtain N groups of first data sequences, wherein N is an integer greater than or equal to 2 |
|---|---|
| S220 | Add first zero data at the beginning of each group of first data sequences, and add second zero data at the end of each group of first data sequences, to obtain N groups of second data sequences |
| S230 | Respectively perform inverse fast Fourier transform on the N groups of second data sequences, to obtain third data sequences |
| S240 | Respectively perform phase compensation processing on the third data sequences, to obtain fourth data sequences |
| S250 | Perform inverse fast Fourier transform on the fourth data sequences, to obtain a group of data sequences |

Fig. 3

Fig. 4

Fig. 5

Fig.6

Fig. 7

Fig. 8

Fig. 9

Fig. 10

## INTERNATIONAL SEARCH REPORT

| International application No. |
| --- |
| **PCT/CN2023/139913** |

### A. CLASSIFICATION OF SUBJECT MATTER

H04L 27/26(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN, 3GPP: 过采样, 添加, 加0, 加零, 添0, 添零, 增加, 补0, 补零, 傅里叶, 付立叶, 傅立叶, 付里叶, 付氏, 傅氏, 逆, 反, 相位, 相偏, 补偿, 子载波, 子带, 干扰, oversampl+, add+, append+, zero, IFFT, IDFT, phase, offset, compensat+, subband, subcarrier, interfer+

### C. DOCUMENTS CONSIDERED TO BE RELEVANT

| Category* | Citation of document, with indication, where appropriate, of the relevant passages | Relevant to claim No. |
| --- | --- | --- |
| A | CN 111901279 A (ZTE CORP.) 06 November 2020 (2020-11-06) description, paragraph 0078 | 1-28 |
| A | CN 111510412 A (ZTE CORP.) 07 August 2020 (2020-08-07) entire document | 1-28 |
| A | US 2004141548 A1 (SHATTIL, Steve J.) 22 July 2004 (2004-07-22) entire document | 1-28 |
| A | NOKIA et al. "Way forward waveform for carrier frequencies beyond 40 GHz" *3GPP TSG-RAN WG1#86bis, R1-1609599*, 15 October 2016 (2016-10-15), entire document | 1-28 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 March 2024** | **06 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/139913**

| Patent document cited in search report | | | Publication date (day/month/year) | Patent family member(s) | | | Publication date (day/month/year) |
|---|---|---|---|---|---|---|---|
| CN | 111901279 | A | 06 November 2020 | WO | 2022007507 | A1 | 13 January 2022 |
| | | | | KR | 20230031936 | A | 07 March 2023 |
| | | | | EP | 4181473 | A1 | 17 May 2023 |
| | | | | US | 2023353438 | A1 | 02 November 2023 |
| CN | 111510412 | A | 07 August 2020 | | None | | |
| US | 2004141548 | A1 | 22 July 2004 | US | 2008310484 | A1 | 18 December 2008 |
| | | | | US | 2002034191 | A1 | 21 March 2002 |

Form PCT/ISA/210 (patent family annex) (July 2022)

**EP 4 597 962 A1**